Europäisches Patentamt

European Patent Office

Office européen des brevets

(19)

(11) **EP 0 665 182 B1**

(12) **EUROPÄISCHE PATENTSCHRIFT**

(45) Veröffentlichungstag und Bekanntmachung des
Hinweises auf die Patenterteilung:
**28.04.1999 Patentblatt 1999/17**

(51) Int. Cl.⁶: **B66B 13/14**, E05F 15/14

(21) Anmeldenummer: **94101255.1**

(22) Anmeldetag: **28.01.1994**

(54) **Verfahren zur Steuerung der Bewegung von Türen**

Method of controlling door movement

Procédé de commande pour mouvement de portes

(84) Benannte Vertragsstaaten:
**AT CH DE ES FR GB IT LI**

(43) Veröffentlichungstag der Anmeldung:
**02.08.1995 Patentblatt 1995/31**

(73) Patentinhaber: **INVENTIO AG**
**CH-6052 Hergiswil NW (CH)**

(72) Erfinder:
• **Gutknecht, Norbert, Dipl.-Ing.**
**D-12107 Berlin (DE)**
• **Sukale, Andreas, Dipl.-Ing.**
**D-12357 Berlin (DE)**

(56) Entgegenhaltungen:
EP-A- 0 031 721          EP-A- 0 406 784
EP-A- 0 548 505          US-A- 4 776 433

• PATENT ABSTRACTS OF JAPAN vol. 16, no. 541
(M-1336) 11. November 1992 & JP-A-04 201 969
(HITACHI LTD) 22. Juli 1992
• PATENT ABSTRACTS OF JAPAN vol. 14, no. 29
(M-922) 19. Januar 1990 & JP-A-01 267 290
(HITACHI LTD) 25. Oktober 1989
• PATENT ABSTRACTS OF JAPAN vol. 16, no. 206
(M-1248) 15. Mai 1992 & JP-A-04 032 488
(HITACHI LTD) 4. Februar 1992
• PATENT ABSTRACTS OF JAPAN vol. 15, no. 414
(M-1171) 22. Oktober 1991 & JP-A-03 172 293
(MITSUBISHI ELECTRIC CORP.) 25. Juli 1991

**Beschreibung**

Die Erfindung betrifft ein Verfahren zur Steuerung der Bewegung von Türen, wobei die Bewegung mittels einer Türsteuerung und eines Türantriebes in Abängigkeit von einer die Geschwindigkeit über der Position der Tür abbildenden Fahrkurve für den Öffnungs-, Schliess- und Reversionsvorgang erfolgt, wobei die Fahrkurve mindestens ein aus einer mathematischen Funktion bestehendes Kurvensegment aufweist.

Mit der Patentschrift US 4 980 618 ist ein Türantrieb bekannt geworden, bei dem ein Motor mittels einer Welle mit einem Türmechanismus in Verbindung steht. Eine von einem Microcomputer gesteuerte Stromversorgung speist den Motor. Drehrichtung und Drehzahl der Welle werden von einem Sensor erfasst und an den Microcomputer weitergeleitet, der die vom Motor angetriebene Tür nach einem vorherbestimmten Geschwindigkeitsprofil öffnet, schliesst und bei Hindernissen reversiert. Beim Öffnungs- und Schliessvorgang wird die Tür von einer minimalen Geschwindigkeit auf eine maximale Geschwindigkeit beschleunigt, auf dieser Geschwindigkeit gehalten und kurz vor dem Ende des Öffnungs- und Schliessvorganges auf eine minimale Geschwindigkeit verzögert. Trifft die Tür während dem Öffnungs- und Schliessvorgang auf ein Hindernis, so wird die Tür gemäss zwei im Microcomputer implementierten Verfahren reversiert. In einem ersten Verfahren wird der Reversionsvorgang aufgrund einer Geschwindigkeitsänderung ausgelöst. Ein Abfall der Geschwindigkeit der Tür unterhalb eine bestimmte Geschwindigkeitslimite bedeutet für den Microcomputer ein Hindernis im Verschiebungsweg der Tür, was die Einleitung des Reversionsvorganges zur Folge hat. In einem zweiten Verfahren wird der Reversionsvorgang durch eine plötzliche Richtungsumkehr der Tür ausgelöst.

Mit der Patentschrift EP 0 031 721 ist ein positionsgeregelter Türantrieb bekannt geworden, bei dem die Kabinensteuerung das Geschwindigkeitsprofil für die Kabinentür bestimmt. Die geschlossene Kabinentür wird mit maximaler Beschleunigung geöffnet. Die maximale Beschleunigung wird beibehalten bis eine maximale Geschwindigkeit erreicht ist, mit der die Tür weiter konstant bewegt wird. Dann wird die Tür mit einem hyperbolisch abnehmenden Geschwindigkeitsprofil von der maximalen Geschwindigkeit auf eine Kriechgeschwindigkeit gebracht.

Ein Nachteil der bekannten Einrichtungen liegt darin, dass mit dem aus Geradensegmenten und Kurvensegmenten bestehenden vorherbestimmten Geschwindigkeitsprofil keine optimale Bewegung der Tür möglich ist.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein Verfahren so auszubilden, dass ein ruckfreier Bewegungsablauf der Tür während des Öffnungs-, Schliess- und Reversionsvorganges erreicht wird.

Die durch die Erfindung erreichten Vorteile sind im wesentlichen darin zu sehen, dass die Tür in jedem Zeitpunkt des Bewegungsablaufes anhaltbar und in entgegengesetzte Richtung bewegbar ist, ohne dass sich dabei die Drehzahl des Motors, beziehungsweise die Geschwindigkeit der Tür stufenartig oder sprungartig ändert, was sich schonend auf die Mechanik des Türantriebes auswirkt. Damit können durch Vibrationen ausgelöste Geräusche der Türflügel vermindert werden. Ein weiterer Vorteil ist darin zu sehen, dass der Bewegungsablauf der Tür an sich ändernde von der Bewegungsrichtung abhängige Lastverhältnisse und an sich ändernde Reversionsbedingungen anpassbar ist. Ein ästhetischer Bewegungsablauf sowie kürzere Öffnungs- und Schliesszeiten der Tür sind weitere Vorteile der Erfindung.

Im folgenden wird die Erfindung anhand von lediglich einen Ausführungsweg darstellenden Zeichnungen näher erläutert. Es zeigen:

Fig. 1   eine aus einzelnen Segmenten bestehende Fahrkurve für Türantriebe,

Fig. 2   einen Fahrkurvenverlauf beim Reversionsvorgang,

Fig. 3   eine schematische Darstellung einer am Verfahren beteiligten Türsteuerung und eines am Verfahren beteiligten Türantriebes,

Fig. 4   ein Flussdiagramm eines ersten Algorithmus zur Steuerung der Türbewegung nach Fahrkurven mit Reversion,

Fig. 5   ein Flussdiagramm eines zweiten Algorithmus zur Berechnung von Fahrkurven für den Öffnungs- und Schliessvorgang sowie für den Reversionsvorgang,

Fig. 6   ein Flussdiagramm eines dritten Algorithmus zur Steuerung der Türbewegung gemäss einer berechneten Fahrkurve,

Fig. 7   ein Flussdiagramm eines vierten Algorithmus zur Steuerung des Bewegungsablaufs beim Reversionsvorgang,

Fig. 8      eine auf Türparameter abgestimmte Fahrkurve,

Fig. 9      ein Flussdiagramm eines fünften Algorithmus zur Steuerung eines Selbstlernvorganges zur Bestimmung der Türparameter und

Fig. 10     ein Flussdiagramm eines sechsten Algorithmus zur Berechnung von auf Türparameter abgestimmte Fahrkurven für den Öffnungs- und Schliessvorgang.

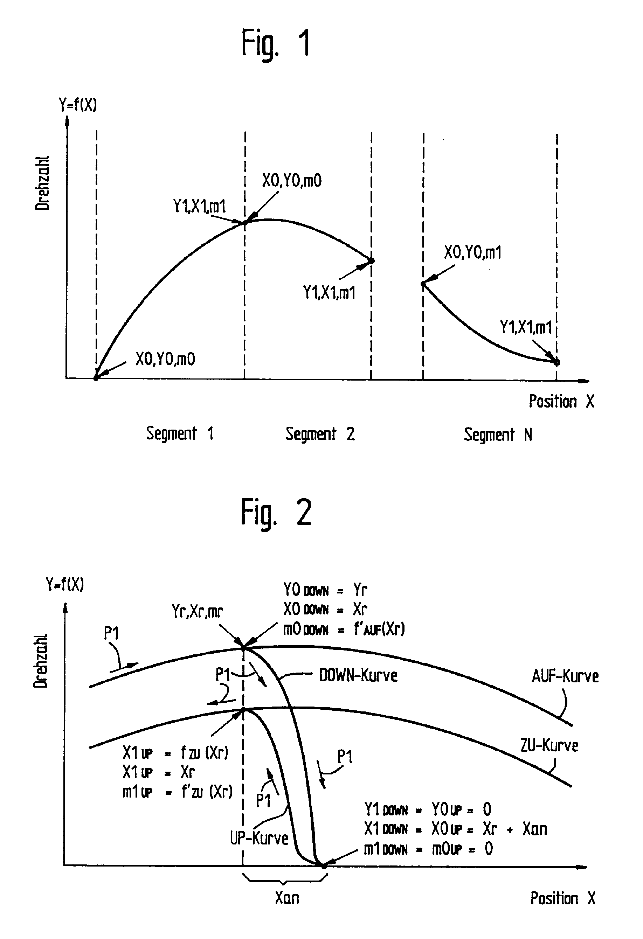

Das erfindungsgemässe Verfahren bezieht sich auf Antriebe, beispielsweise Türantriebe, bei denen Massen, beispielsweise Türen, linear und mit variabler Geschwindigkeit positionsabhängig bewegt werden. Die Türbewegung basiert auf einer Fahrkurve, die durch vorher festzulegende Parameter positionsabhängig berechnet wird. Die Positionsinformation wird beispielsweise mittels eines Inkrementalgebers erzeugt. Die Türbewegung wird zweckmässigerweise in einem Koordinatensystem dargestellt, das gemäss Fig. 1 Drehzahlwerte $Y = f(X)$ des Antriebsmotors über der Position X der Tür abbildet. Die Fahrkurve besteht dabei aus beliebig vielen Kurvensegmenten, die vorgegebenen mathematischen Funktionen entsprechen. Die gesamte Fahrkurve wird durch einige wenige charakteristische Punkte - den Stützstellen - definiert. Nur die Koordinaten dieser Stützstellen müssen vorgegeben werden, um eine beliebige Fahrkurve zu erstellen.

Jedes Kurvensegment wird durch zwei Stützstellen begrenzt. Die damit eindeutig festgelegte Fahrkurve muss nun so berechnet werden, dass die einzelnen Stützstellen miteinander verbunden werden. Da die Fahrkurve keine Stufen oder Knicke, sogenannte Unstetigkeitsstellen haben darf, können die Stützstellen nicht einfach durch mehrere unterschiedliche Geraden verbunden werden. Der Übergang von einem Bereich in einen anderen erfolgt stetig differenzierbar, so dass die sich in den Stützstellen treffenden Funktionen die gleiche Steigung haben. Die Anzahl der Segmente und Stützstellen soll variabel und unbegrenzt sein.

Bei allen Antrieben, bei denen die Bewegung je nach Bewegungsrichtung unterschiedlichen Anforderungen genügen muss, beispielsweise Verminderung der Geschwindigkeit in einer Richtung auf Grund von Vorschriften, ist es sinnvoll, für jede Bewegungsrichtung eine spezielle Fahrkurve zu erstellen.

Jede Fahrkurve ist gemäss Fig. 1 aus mehreren Segmenten zusammengesetzt. Obwohl die Funktionen innerhalb der einzelnen Kurvensegmente theoretisch jede beliebige Ordnung der Form

$$Y = A * X^n + B * X^{n-1} + C * X^{n-2} + \ldots$$

haben könnten, werden in der praktischen Anwendung der Einfachheit halber Parabel-Funktionen dritter Ordnung von der Form

$$Y = A * X^3 + B * X^2 + C * X + D,$$

verwendet, wobei einzelne Konstanten (A, B, C, D) auch Null sein können. In den Stützstellen sollen die Funktionen der benachbarten Segmente die gleichen Steigungen haben, so dass die Funktion des einen Segmentes in die Funktion des nächsten Segmentes stetig ineinander übergeht. Die mit m0 bezeichnete Steigung einer ersten Stützstelle X0 muss vorgegeben werden. Für die Berechnung der Funktionen der einzelnen Kurvensegmente müssen die vier Konstanten A, B, C, D bestimmt werden, wofür vier unabhängige Gleichungen aufgestellt werden. Zwei Gleichungen erhält man aus den beiden Stützpunkten, zwischen denen die Funktion berechnet werden soll. Die dritte und vierte Gleichung erhält man aus der Steigung der beiden Stützstellen m0 und m1. Für das Segment N einer Fahrkurve, in dem eine Funktion berechnet werden soll, hat die linke Stützstelle die Koordinaten X0/Y0 und die rechte Stützstelle die Koordinaten X1/Y1.

Es sind nun folgende drei Fälle zu unterscheiden:

1. Das Segment ist eine Gerade:

    A = 0      B = 0      C >< 0      D >< 0

2. Das Segment ist eine $X^2$-Parabel:

    A = 0      B >< 0      C >< 0      D >< 0

3. Das Segment ist eine $X^3$-Parabel:

$$A \gtrless 0 \qquad B \gtrless 0 \qquad C \gtrless 0 \qquad D \gtrless 0$$

Die Gerade wird bei Vorgabe der Stützstellen X0/Y0, X1/Y1 wie folgt berechnet:

1. $A = 0$
2. $B = 0$
3. $C = m0 = m1 = (Y1 - Y0)/(X1 - X0)$
4. $D = Y0 - C * X0$

Die $X^2$-Parabel wird bei Vorgabe der Stützstellen X0/Y0, X1/Y1 und der Steigung m0 im Punkt X0 wie folgt berechnet:

1. $A = 0$
2. $Y0 = B * X0^2 + C * X0 + D$
3. $Y1 = B * X1^2 + C * X1 + D$
4. $m0 = 2 * B * X0 + C$

Nach Auflösung dieses Gleichungssystems erhält man für die Konstanten:

$$C = \frac{Y1 - (m0 * x1^2)/(2 * X0) + \tfrac{1}{2} * X0 * m0 - Y0}{X1 - (X1^2)/(2X0) - \tfrac{1}{2} * X0}$$

$$B = (m0 - C)/(2 * X0) \qquad D = Y1 - B * X1^2 - C * X1$$

Die $X^3$-Parabel wird bei Vorgabe der Stützstellen X0/Y0, X1/Y1 und der Steigung m0 im Punkt X0 und der Steigung m1 im Punkt X1 wie folgt berechnet:

Zur Wahrung der Übersichtlichkeit werden folgende Substitutionen gemacht:

$$K1 = X1 - X0 \qquad K2 = X1^2 - X0^2 \qquad K3 = X1^3 - X0^3$$

$$K4 = 3 * x1^2 - (K3/K1) \qquad K5 = 2 * x1 - (K2/K1)$$

Nach Auflösung des Gleichungssystems erhält man für die Konstanten:

$$A = \frac{K5 * (m1 - m0)/(2 * K1) - (Y0 - Y1)/(K1) - m1}{(3 * K2 * K5)/(2 * K1) - K4}$$

$$B = (m1 - m0 - 3 * K2 * A)/(2 * K1)$$

$$C = m1 - 3 * X1^2 * A - 2 * X1 * B$$

$$D = Y0 - A * X0^3 - B * X0^2 - C * X0$$

Nach der Durchführung dieser Berechnungen für alle Segmente erhält man eine stetige Fahrkurve.

Zu jedem beliebigen Zeitpunkt des Bewegungsablaufes muss die Tür angehalten und in die entgegengesetzte Richtung bewegt werden können. Um die Änderung der Drehzahl stetig vollführen zu können, muss eine geeignete Funktion gefunden werden, die keine Stufen und Sprünge verursacht und die in einem Kurvenpunkt Yr/Xr von einer ersten Fahrkurve AUF des Öffnungsvorganges ausgeht. Eine solche Funktion wird gemäss Fig. 2 durch den Kurvenpunkt Xr/Yr im Augenblick des Auftretens der Reversionsursache und durch den Anhalteweg Xan begrenzt, wodurch ein Kurvensegment definiert wird, in dem eine entsprechende Kurve zu berechnen ist.

Nachdem die Tür im Anhaltepunkt zum Stehen gekommen ist, muss sie in die entgegengesetzte Richtung beschleunigt werden und in die Fahrkurve der Gegenrichtung münden. Zu der abgebremsten und der beschleunigten Bewegungsphase des gesamten Reversionsvorganges wird jeweils eine mit DOWN beziehungsweise eine mit UP bezeichnete $X^3$-Parabel berechnet. Auch hier ist es möglich, die beiden Bewegungsphasen aus Reversionskurven zusammenzusetzen, die aus mehreren Segmenten bestehen.

Fig. 2 zeigt eine erste Fahrkurve AUF, die im Kurvenpunkt Xr/Yr in eine erste Reversionskurve DOWN mündet. Eine zweite Reversionskurve UP geht im Kurvenpunkt X1/Y1 in eine zweite Fahrkurve ZU über. Wie aus Fig. 2 ersichtlich, legt die Steigung im Umkehrpunkt Xan fest, ob das Erreichen der Null-Drehzahl des Motors hart oder weich erfolgt. Die Länge des Anhalteweges bestimmt die aufzubringende Brems- und Beschleunigungsenergie und das maximale Motordrehmoment. Nach der Umkehr der Bewegungsrichtung im Anhaltepunkt vollzieht sich die Türbewegung gemäss der zweiten Reversionskurve UP. Sie mündet in einen beliebig festzulegenden Kurvenpunkt der zweiten Fahrkurve ZU des Schliessvorganges. Die zweite Reversionskurve UP muss nicht in jedem Fall an der Stelle Xr in die zweite Fahrkurve ZU des Schliessvorganges münden. Die Pfeile P1 in Fig. 2 geben den Bewegungsverlauf der Tür an. Die Steigungen m0, m1 ergeben sich durch die Ableitung f'(X) an der entsprechenden Stelle.

Je Segment sind ausser den oben genannten Parabel-Funktionen auch Geraden oder andere mathematische Funktionen möglich.

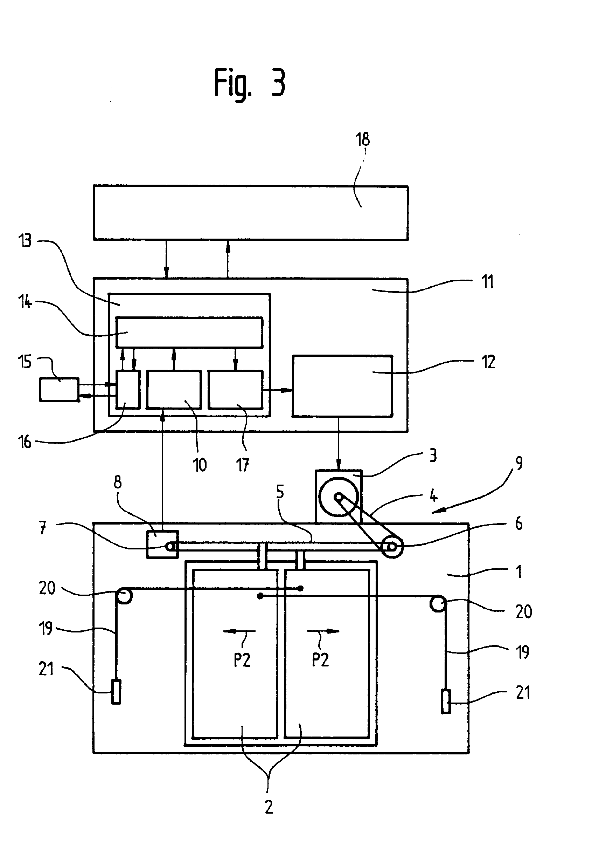

In Fig. 3 ist eine am Verfahren beteiligte Türsteuerung und ein am Verfahren beteiligter Türantrieb dargestellt. Eine mit 1 bezeichnete Aufzugskabine weist Türflügel 2 auf, die von einem aus einem Motor 3, einem ersten Zahnriemen 4, einem zweiten Zahnriemen 5, einer Antriebsrolle 6, einer ersten Umlenkrolle 7 und einem Inkrementalgeber 8 bestehenden Türantrieb 9 angetrieben werden. Zweite Pfeile P2 zeigen die Öffnungsrichtung der Türflügel 2. Der Motor 3 wird von einem Leistungsteil 12 der Türsteuerung 11 mit elektrischer Energie versorgt. Der von der ersten Umlenkrolle 7 angetriebene Inkrementalgeber 8 steht mit einem zweiten Interface 10 eines Microcomputers 13 in Verbindung. In einem Fahrkurvenrechner 14 des Microcomputers 13 implementierte Algorithmen steuern den Türantrieb 9. Im Verfahren benötigte Konstanten sind frei wählbar und werden den Algorithmen mittels eines Terminals 15 mitgeteilt, das mittels eines ersten Interface 16 an den Microcomputer 13 angeschlossen ist. Soll- und Istwerte der Türflügelposition teilt der Fahrkurvenrechner 14 einer Regelung 17 mit, die dementsprechend den Leistungsteil 12 steuert. Eine der Türsteuerung 11 übergeordnete Aufzugssteuerung 18 leitet die Öffnungsbewegung der Türflügel 2 ein und fertigt bei geschlossener Tür die Aufzugskabine 1 ab.

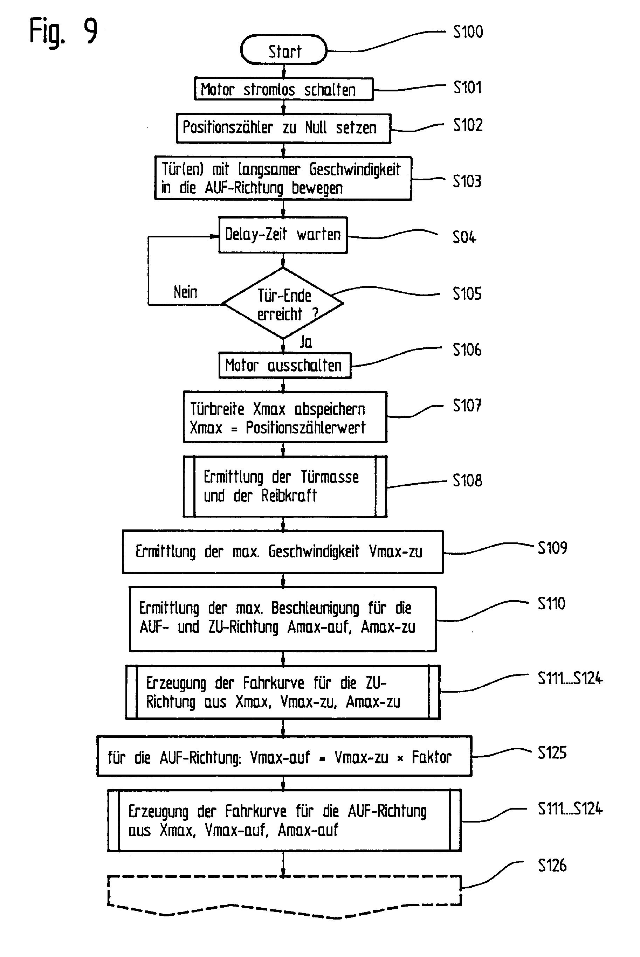

Zur Bestimmung von Türparametern wird jeder Türflügel 2 über einen Seilzug 19 und eine zweite Umlenkrolle 20 mit einem Schliessgewicht 21 verbunden. Die Parameter werden in einem in den Fig. 8 bis 10 näher erläuterten Selbstlernvorgang bestimmt und zur Erzeugung einer auf die Türparameter abgestimmten Fahrkurve verwendet.

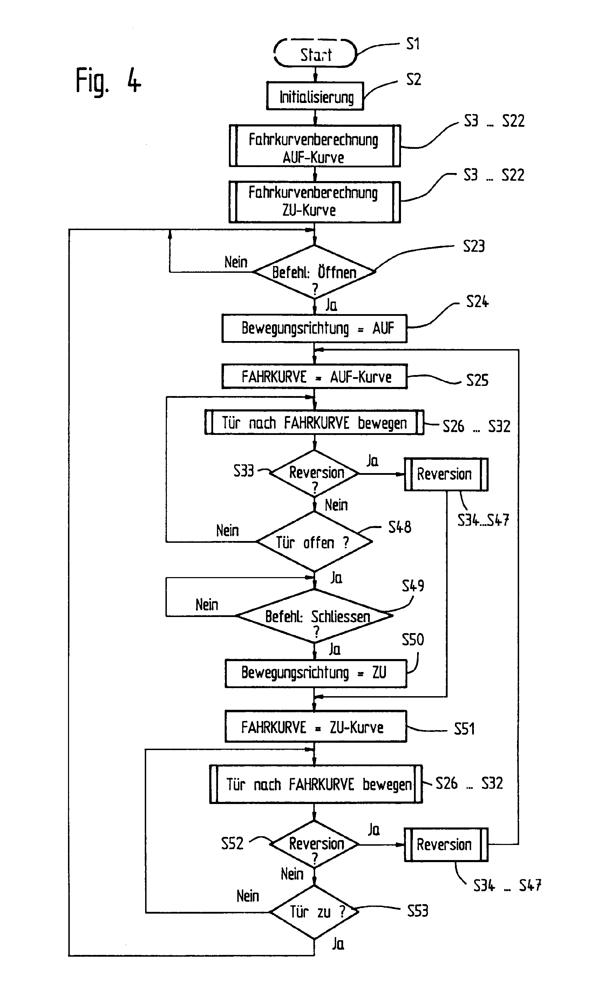

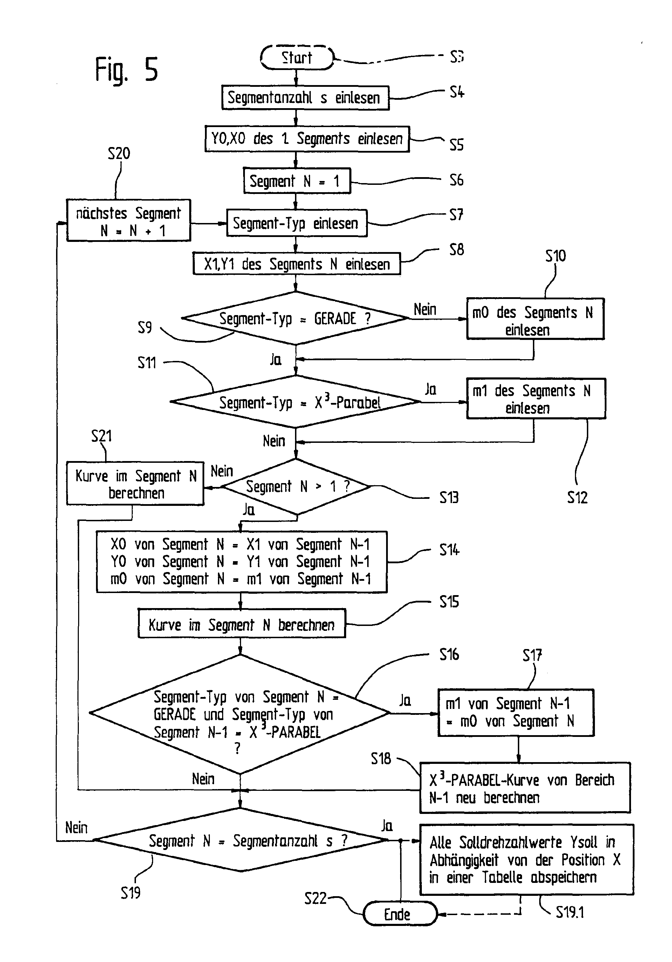

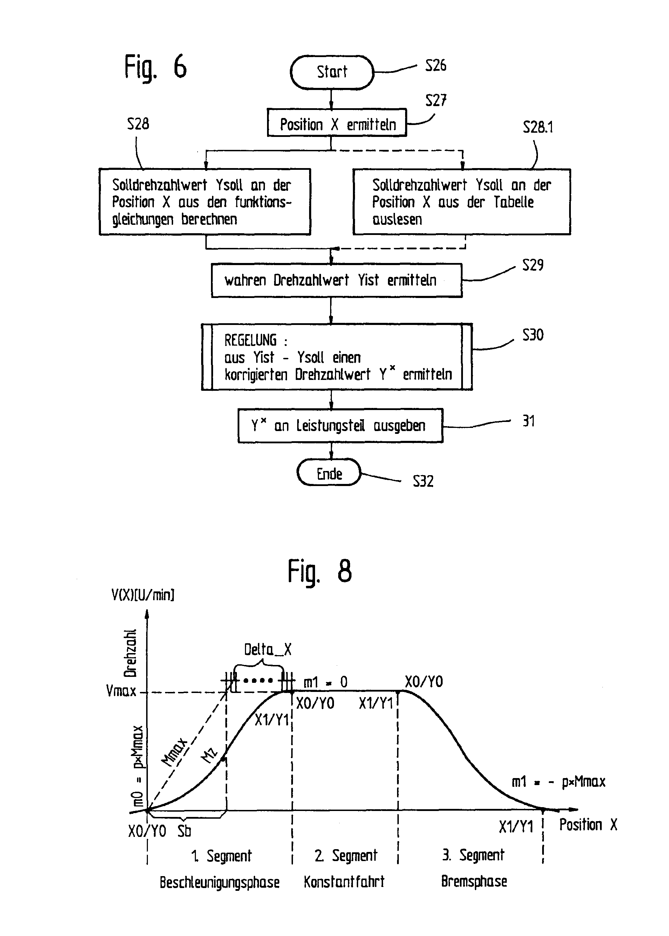

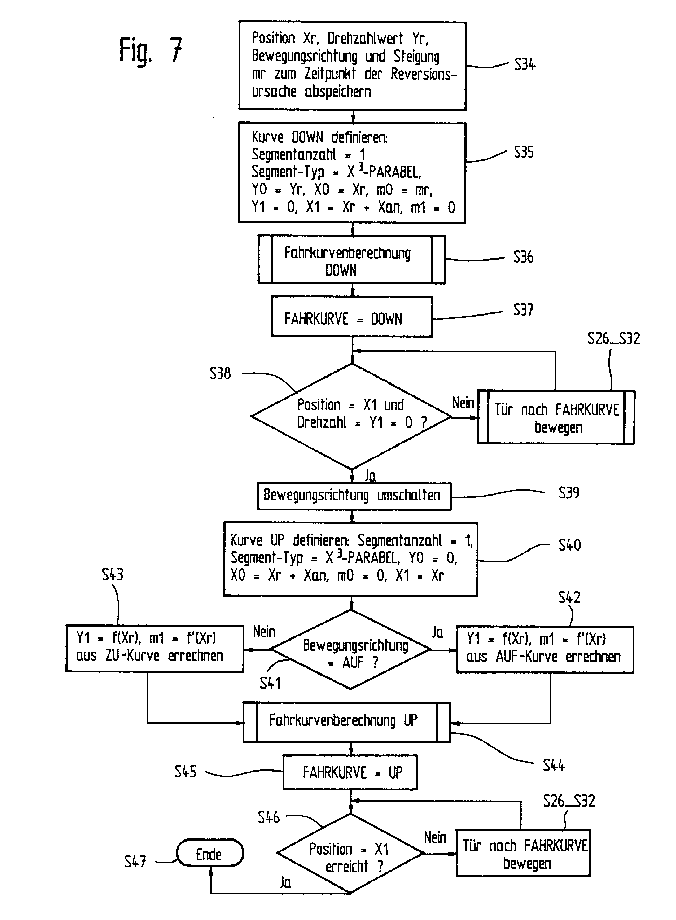

Fig. 4 zeigt die Struktur und den sequentiellen Ablauf eines ersten Algorithmus ALGO1 zur Steuerung der Türbewegung nach Fahrkurven mit Reversion. In einem ersten Schritt S1 wird der Algorithmus ALGO1 gestartet. Im Schritt S2 werden in bekannter Weise alle im Algorithmus ALGO1 verwendeten Konstanten und Variablen einmalig in den Ausgangszustand gebracht. Die Schritte S3 ... S22 bilden einen zweiten Algorithmus ALGO2 und umfassen die Fahrkurvenberechnung der ersten Fahrkurve AUF und die Fahrkurvenberechnung der zweiten Fahrkurve ZU. Die Struktur und der sequentielle Ablauf des zweiten Algorithmus ALGO2 zur Berechnung von Fahrkurven für den Öffnungs- und Schliessvorgang ist in Fig. 5 näher erläutert. Im Schritt S23 wird geprüft, ob ein von der Aufzugssteuerung 18 abgesetzter Befehl zur Türöffnung ansteht. Bei einem mit Nein bezeichneten negativen Ergebnis der Prüfung wiederholt der erste Algorithmus ALGO1 den Schritt S23. Ein mit Ja bezeichnetes positives Ergebnis der im Schritt S23 durchgeführten Prüfung rechtfertigt die Ausführung des Schrittes S24, in dem der Bewegungsrichtung der Wert AUF zugeordnet wird. Im nachfolgenden Schritt S25 wird der als Variable definierten FAHRKURVE die erste Fahrkurve AUF zugeordnet. Dann steuert der erste Algorithmus ALGO1 die Öffnungsbewegung der Tür gemäss einem als Schritte S26 ... S32 der Fig. 6 dargestellten dritten Algorithmus ALGO3. Im anschliessenden Schritt S33 wird geprüft, ob Anlass zur Auslösung der Türreversion besteht. Ein mit Ja bezeichnetes positives Ergebnis der im Schritt S33 durchgeführten Prüfung rechtfertigt den Start eines vierten die Schritte S34 ... S47 umfassenden Algorithmus ALGO4 für den Reversionsvorgang gemäss Fig. 7. Anschliessend setzt der erste Algorithmus ALGO1 den sequentiellen Ablauf beim Schritt S51 fort. Bei einem mit Nein bezeichneten negativen Ergebnis der im Schritt S33 durchgeführten Prüfung wird die im Schritt S48 gezeigte Prüfung ausgeführt, bei der geprüft wird, ob die Offenstellung der Tür bereits erreicht ist. Bei einem mit Nein bezeichneten negativen Ergebnis führt der erste Algorithmus ALGO1 erneut die Schritte S26 ... S48 aus. Ein mit Ja bezeichnetes Ergebnis der im Schritt S48 durchgeführten Prüfung leitet den Schritt S49 ein, in dem geprüft wird, ob ein von der Aufzugssteuerung 18 abgesetzter Befehl zur Türschliessung ansteht. Bei einem mit Nein bezeichneten negativen Ergebnis der Prüfung wiederholt der erste Algorithmus ALGO1 den Schritt S49. Ein mit Ja bezeichnetes positives Ergebnis der im Schritt S49 durchgeführten Prüfung rechtfertigt die Ausführung des Schrittes S50, in dem der Bewegungsrichtung der Wert ZU zugeordnet wird. Im nachfolgenden Schritt S51 wird der FAHRKURVE die zweite Fahrkurve ZU zugeordnet. Dann steuert der erste Algorithmus ALGO1 die Schliessbewegung der Tür gemäss einem in den Schritten S26 ... S32 der Fig. 6 dargestellten dritten Algorithmus ALGO3. Im anschliessenden Schritt S52 wird geprüft, ob Anlass zur Auslösung der Türreversion besteht. Ein mit Ja bezeichnetes positives Ergebnis der im Schritt S52 durchgeführten Prüfung rechtfertigt den Start des vierten die Schritte S34 ... S47 umfassenden Algorithmus ALGO4 für den Reversionsvorgang gemäss Fig. 7. Anschliessend setzt der erste Algorithmus ALGO1 den sequentiellen Ablauf beim Schritt S25 fort. Bei einem mit Nein bezeichneten negativen Ergebnis der im Schritt S52 durchgeführten Prüfung wird die im Schritt S53 gezeigte Prüfung ausgeführt, bei der geprüft wird, ob die Geschlossenstellung der Tür bereits erreicht ist. Bei einem mit Nein bezeichneten negativen Ergebnis führt der erste Algorithmus ALGO1 erneut die Schritte S26 ... S32, S34 ... S47 und S52, S53 aus. Bei einem mit Ja bezeichneten Ergebnis der im Schritt S53 durchgeführten Prüfung setzt der erste Algorithmus ALGO1 den sequentiellen Ablauf beim Schritt S23 fort.

Fig. 5 zeigt die Struktur und den sequentiellen Ablauf eines zweiten Algorithmus ALGO2 zur Berechnung von Fahrkurven in der Form von Funktionsgleichungen für den Öffnungs- und Schliessvorgang sowie für den Reversionsvorgang der Tür. In einem dritten Schritt S3 wird der zweite Algorithmus ALGO2 gestartet. Im Schritt S4 importiert der zweite Algorithmus ALGO2 die am Terminal 15 eingegebene Segmentanzahl s. Im Schritt S5 importiert der zweite Algorithmus ALGO2 den am Terminal 15 eingegebenen Startpunkt der Kurve in der Form des Wertepaares X0/Y0 des ersten Segmentes. Im Schritt S6 wird dem segment N der Wert 1 zugeordnet. Im Schritt S7 importiert der zweite Algorithmus ALGO2 den am Terminal 15 eingegebenen Segmenttyp, wobei der Segmenttyp eine Gerade, eine $X^2$-Parabel oder eine $X^3$-Parabel sein kann. Im Schritt S8 importiert der zweite Algorithmus ALGO2 den am Terminal 15 eingegebenen Endpunkt des ersten Segmentes in der Form des Wertepaares X1/Y1. Im anschliessenden Schritt S9 wird geprüft, ob dem Segmenttyp im Schritt S7 eine Gerade zugeordnet worden ist. Ein mit Nein bezeichnetes negatives Ergebnis der im Schritt S9 durchgeführten Prüfung verlangt den Schritt S10, in dem der zweite Algorithmus ALGO2 die am Terminal 15 eingegebene Steigung m0 im Startpunkt des N-ten Segmentes importiert. Ein mit Ja bezeichnetes positives Ergebnis der im Schritt S9 durchgeführten Prüfung wie auch der Abschluss des Schrittes S10 führt zum Schritt S11, in dem geprüft wird, ob dem Segmenttyp im Schritt S7 eine $X^3$-Parabel zugeordnet worden ist. Ein mit Ja bezeichnetes positives Ergebnis der im Schritt S11 durchgeführten Prüfung verlangt den Schritt S12, in dem der zweite Algorithmus ALGO2 die am Terminal 15 eingegebene Steigung m1 im Endpunkt des N-ten Segmentes importiert. Ein mit Nein bezeichnetes negatives Ergebnis der im Schritt S11 durchgeführten Prüfung wie auch der Abschluss des Schrittes S12 führt zum Schritt S13, in dem geprüft wird, ob bereits mindestens ein Segment berechnet worden ist. Ein mit Nein bezeichnetes negatives Ergebnis der im Schritt S13 durchgeführten Prüfung rechtfertigt die Ausführung des Schrittes S21, in dem die Kurve des ersten Segmentes berechnet wird. Anschliessend setzt der zweite Algorithmus ALGO2 den sequentiellen Ablauf beim Schritt S19 fort. Ein mit Ja bezeichnetes positives Ergebnis der im Schritt S13 durchgeführten Prüfung verlangt den Schritt S14, in dem der zweite Algorithmus ALGO2 dem Kurvenpunkt X0/Y0 und der Steigung m0 des aktuellen Segmentes den Kurvenpunkt X1/Y1 und die Steigung m1 des vorangehenden Segmentes zuordnet. Dann wird im Schritt S15 die Kurve des aktuellen Segmentes berechnet. Im Schritt S16 wird geprüft, ob der Segmenttyp des aktuellen Segmentes eine Gerade und der Segmenttyp des vorangehenden Segmentes eine $X^3$-Parabel ist. Ein mit Ja bezeichnetes positives Ergebnis der im Schritt S16 durchgeführten Prüfung leitet die im Schritt S17 durchgeführte Zuordnung ein, bei der die Steigung m0 im Startpunkt des aktuellen Segmentes der Steigung m1 im Endpunkt des vorangehenden Segmentes zugeordnet wird. Im anschliessenden Schritt S18 wird die $X^3$-Parabel des vorangehenden Segmentes erneut berechnet, sodass der Endpunkt X1/Y1 der $X^3$-Parabel die Steigung der Geraden hat. Ein mit Nein bezeichnetes negatives Ergebnis der im Schritt S16 durchgeführten Prüfung wie auch der Abschluss des Schrittes S18 führt zum Schritt S19, in dem geprüft wird, ob die Anzahl der berechneten Segmente der im Schritt S4 gesetzten Segmentanzahl s entspricht. Bei einem mit Nein bezeichneten negativen Ergebnis der im Schritt S19 durchgeführten Prüfung erhöht der zweite Algorithmus ALGO2 im Schritt S20 den Wert des Segmentes N um 1 und wiederholt den sequentiellen Ablauf mit dem Schritt S7 beginnend. Bei einem mit Ja bezeichneten positiven Ergebnis der im Schritt S19 durchgeführten Prüfung wird der sequentielle Ablauf des zweiten Algorithmus ALGO2 mit dem Schritt S22 beendet.

Fig. 6 zeigt die Struktur und den sequentiellen Ablauf eines dritten Algorithmus ALGO3 zur Steuerung der Türbewegung gemäss einer berechneten Fahrkurve. Im Schritt S26 wird der dritte Algorithmus ALGO3 gestartet, der im Schritt S27 den Stand des Inkrementalgebers 8 mittels des zweiten Interface 10 importiert und daraus die Position X der Türflügel 2 ermittelt. Im anschliessenden Schritt S28 bestimmt der dritte Algorithmus ALGO3 aus der aktuellen in der Form einer Funktionsgleichung dargestellten Fahrkurve den Sollwert der Drehzahl an der Position X. Im Schritt S29 liefert der Inkrementalgeber 8 mittels des zweiten Interface 10 den aktuellen Istwert der Drehzahl an den dritten Algorithmus ALGO3, der eine der Differenz aus Istwert und Sollwert der Drehzahl entsprechende Regelabweichung im Schritt S30 an die Regelung 17 weiterleitet, die im Schritt S31 den Leistungsteil 12 mit einem der Regelabweichung proportionalen Steuersignal beaufschlagt. Der sequentielle Ablauf des dritten Algorithmus ALGO3 wird mit dem Schritt S32 beendet.

Fig. 7 zeigt die Struktur und den sequentiellen Ablauf eines vierten Algorithmus ALGO4 zur Steuerung des Bewegungsablaufs beim Reversionsvorgang. Ein mit Ja bezeichnetes positives Ergebnis der im Schritt S33 durchgeführten Prüfung aktiviert den vierten Algorithmus ALGO4, der im Schritt S34 zum Zeitpunkt der Reversionsursache die Position Xr, den Drehzahlwert Yr, die Bewegungsrichtung und die Steigung mr abspeichert. Danach wird im Schritt S35 die erste Reversionskurve DOWN definiert, indem alle zur Berechnung eines $X^3$-Parabelsegmentes notwendigen Parameter festgelegt werden. Mit diesen Parametern berechnet der vierte Algorithmus ALGO4 im Schritt S36 das $X^3$-Parabelsegment mit Hilfe des zweiten Algorithmus ALGO2 und ordnet es im Schritt S37 der Variablen FAHRKURVE zu. Im Schritt S38 wird geprüft, ob die Türflügel 2 bereits zum Stillstand gekommen sind. Bei einem mit Nein bezeichneten negativen Ergebnis der im Schritt S38 durchgeführten Prüfung steuert der dritte Algorithmus ALGO3 die Bewegung der Türflügel 2 gemäss den Schritten S26 ... S32. Ein mit Ja bezeichnetes positives Ergebnis der im Schritt S38 durchgeführten Prüfung aktiviert den Schritt S39, in dem die Bewegungsrichtung umgeschaltet wird. Anschliessend wird im Schritt S40 die zweite Reversionskurve UP definiert, indem alle zur Berechnung eines $X^3$-Parabelsegmentes notwendigen Parameter festgelegt werden. Im Schritt S41 wird die Bewegungsrichtung überprüft. Ein mit Ja bezeichnetes positives Ergebnis der im Schritt S41 durchgeführten Prüfung löst den Schritt S42 aus, in dem aus der ersten Fahrkurve AUF der Drehzahlwert Y1 und die Steigung m1 des Reversionspunktes berechnet wird. Ein mit Nein bezeichnetes negatives Ergebnis der im Schritt S41 durchgeführten Prüfung löst den Schritt S43 aus, in dem aus der zweiten Fahrkurve ZU der Drehzahlwert Y1 und die Steigung m1 des Reversionspunktes berechnet wird. Die Schritte S42 und S43 führen zum Schritt S44, in dem der vierte Algorithmus ALGO4 mit den im Schritt S40 festgelegten Parametern das $X^3$-Parabelsegment mit Hilfe des zweiten Algorithmus ALGO2 berechnet und es im Schritt S45 der Variablen FAHRKURVE zuordnet. Im Schritt S46 wird geprüft, ob die Türflügel 2 bereits die Position X1 zum Zeitpunkt der Reversionsursache erreicht haben. Bei einem mit Nein bezeichneten negativen Ergebnis der im Schritt S46 durchgeführten Prüfung steuert der dritte Algorithmus ALGO3 die Bewegung der Türflügel 2 gemäss den Schritten S26 ... S32. Ein mit Ja bezeichnetes positives Ergebnis der im Schritt S46 durchgeführten Prüfung initialisiert den Schritt S47, der den sequentiellen Ablauf des vierten Algorithmus ALGO4 beendet.

Im obigen Ausführungsbeispiel ist das erfindungsgemässe Verfahren anhand eines Türantriebes mit horizontal öffnenden Schiebetüren erläutert. Das Verfahren eignet sich jedoch auch für Türantriebe mit vertikal öffnenden Schiebetüren, für Türantriebe mit Drehtüren und für Türantriebe mit Schwenktüren.

Gemäss Fig. 4 und 5 werden die erste Fahrkurve AUF und die zweite Fahrkurve ZU dem Öffnungs- und Schliessvorgang vorgängig berechnet, wobei für jedes einzelne Segment nacheinander die Funktionsgleichungen anhand von vorher festgelegten Stützstellen berechnet werden. Folglich besteht die Fahrkurve aus einer der Segmentzahl entsprechenden Anzahl von Funktionsgleichungen. Diese Funktionsgleichungen sind in einem Speicherbereich des Fahrkurvenrechners 14 abgelegt. In den Schritten S25 und S51 wird der Variablen FAHRKURVE der Speicherbereich zugeordnet, in dem die Funktionsgleichungen für die Solldrehzahlberechnung stehen. Während des Bewegungsablaufs wird im Schritt S28 jeder Drehzahlsollwert an der Position X sequentiell aus der entsprechenden Funktionsgleichung berechnet.

Die erste Reversionskurve UP und die zweite Reversionskurve DOWN werden immer zum Zeitpunkt der Reversionsursache berechnet. In den Schritten S37 und S45 wird der Variablen FAHRKURVE der Speicherbereich zugeordnet, in dem die Funktionsgleichungen für die Solldrehzahlberechnung stehen. Während des Bewegungsablaufs wird im Schritt S28 jeder Drehzahlsollwert an der Position X sequentiell aus der entsprechenden Funktionsgleichung berechnet.

In einer weiteren Ausführungsvariante werden die Drehzahlsollwerte der Fahrkurven AUF, ZU für alle möglichen Positionswerte aus den oben genannten Funktionsgleichungen berechnet und in einer Tabelle abgespeichert. Dieser zusätzliche Schritt ist in Fig. 5 mit S19.1 bezeichnet. In den Schritten S25 und S51 wird der Variablen FAHRKURVE der Speicherbereich zugeordnet, in dem die Tabelle mit den Drehzahlsollwerten und Positionswerten steht. Wie in Fig. 6 gezeigt, wird während des Bewegungsablaufs anstatt des Schrittes S28 der Schritt S28.1 ausgeführt, in dem der Drehzahlsollwert an der Position X aus der Tabelle ausgelesen wird. Diese Ausführungsvariante hat den Vorteil, dass der Fahrkurvenrechner 14 während des Bewegungsablaufs keine zeitintensiven Berechnungen ausführen muss, vorausgesetzt dass keine Reversionsursachen vorliegen.

In den Fig. 8 bis 10 ist ein Anwendungsbeispiel der erfindungsgemässen Fahrkurven beschrieben. Dabei werden aus in einem Selbstlernvorgang bestimmten Türparametern optimal auf die zu öffnende und zu schliessende Tür abgestimmte Fahrkurven berechnet. Einer optimierten Fahrkurve kommt grosse Bedeutung zu, weil einerseits aufgrund einer höchst zulässigen Türenergie in der Schliessrichtung die maximal zulässige Schliessgeschwindigkeit begrenzt ist, andererseits aber möglichst kurze Türöffnungs- und Türschliesszeiten verlangt werden. Da bei jeder Tür, selbst bei baugleichen Türen unterschiedliche kinetische Verhältnisse hinsichtlich Türmasse, Reibung und Motordrehmoment auftreten, ist für jede Tür eine optimierte Fahrkurve notwendig. Weil dies aber zu einem erheblichen Einstellaufwand führt, ist es wünschenswert, einen Türantrieb zu bauen, der seine kinetischen Verhältnisse selbst erfasst und daraus eine optimale Fahrkurve ableitet. Bei Neuinstalltionen oder beim Austausch einzelner Komponenten kann damit der Inbetriebnahmeaufwand gering gehalten werden.

Zur Durchführung des Selbstlernvorganges wird im Microcomputer 13 ein fünfter Algorithmus ALGO5 gemäss Fig. 9 implementiert und an den Türflügeln 2 Schliessgewichte 21 wie in Fig. 3 gezeigt angeordnet. Die zu lernenden Parameter sind die Türmasse und die Türbreite. Das zur Türmasseerkennung notwendige Verfahren ist in der veröffentlichten Anmeldeschrift EP-A1-0 548 505 beschrieben. Die Türbreite wird als Inkrementzahl vom Inkrementalgeber 8 während eines Türöffnungsvorganges ermittelt. Die Ergebnisse des Selbstlernvorganges werden in die Parameter

   a) Vmax: Maximale Geschwindigkeit aus maximaler Türenergie

b) Amax: Maximale Beschleunigung aus begrenztem Motordrehmoment

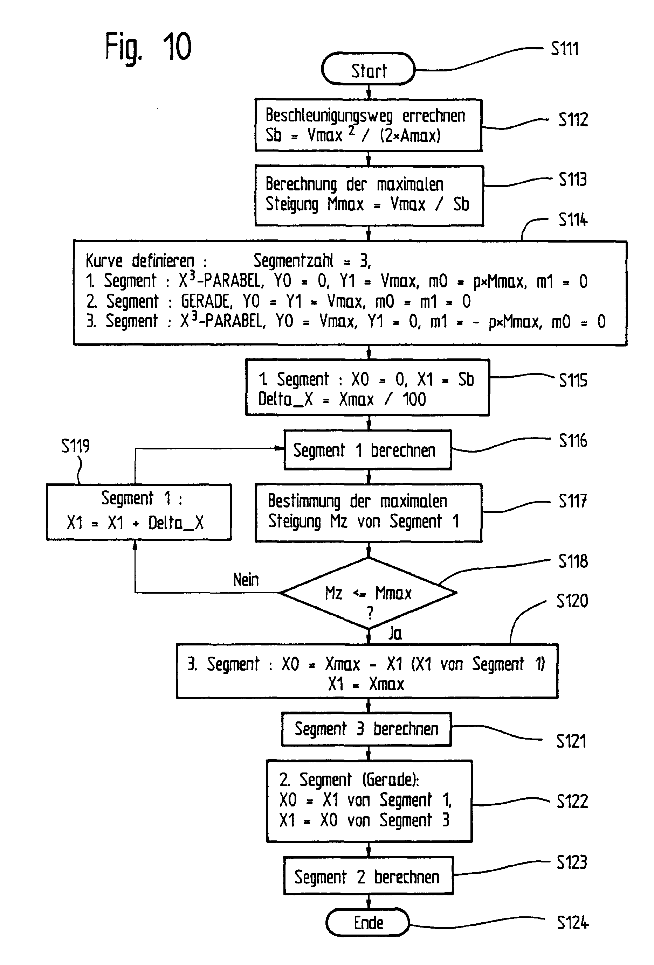

c) Xmax: Maximale Inkrementzahl aus der Türbreite umgewandelt und an den Fahrkurvenrechner 14 übergeben. Aus diesen Parametern kann gemäss einem in Fig. 10 gezeigten sechsten Algorithmus ALGO6 eine Fahrkurve berechnet werden, die aus drei Segmenten besteht, wobei das erste und dritte Segment eine $X^3$-Parabel und das zweite Segment eine Gerade ist. Wie in Fig. 8 dargestellt wird jedem Fahrkurvensegment eine Bewegungsphase zugeordnet:

1. Segment -> Beschleunigung auf Vmax
2. Segment -> Fahrt mit konstanter Geschwindigkeit Vmax
3. Segment -> Bremsphase von Vmax nach Null.

Der sechste Algorithmus ALGO6 bestimmt aus den Parametern Vmax, Xmax und Amax die zur Fahrkurvenberechnung notwendigen Stützstellen. Dabei darf die maximale Steigung der $X^3$-Parabel keine grössere Beschleunigung verursachen als Amax. Weil die Fahrkurvenberechnung in einem Koordinatensystem dargestellt wird, in dem die Geschwindigkeit über dem Weg abgebildet wird, muss der zeitabhängige Parameter Amax in einen wegabhängigen Parameter umgerechnet werden. Die Steigung Mmax stellt eine Geschwindigkeitsänderung pro Wegstrecke Vmax/Sb dar und entspricht einer wegabhängigen Beschleunigung. Gemäss Fig. 10 verschiebt der sechste Algorithmus ALGO6 die zweite Stützstelle X1/Y1 des 1. Segmentes um den Wert Delta_X mit Sb beginnend solange nach rechts, bis die berechnete $X^3$-Parabel zwischen X0 und X1 eine maximale Steigung von Mz aufweist, die höchstens Mmax ist. Das 3. Segment entspricht der Spiegelung des 1. Segmentes. Bei der Bremsphase herrschen entsprechend umgekehrte Verhältnisse. Die einzige Variationsmöglichkeit für die Kurvenform besteht darin, die Steigung in der ersten und letzten Stützstelle mit einem Faktor p von 0 ... 99% von Mmax zu verändern. Bei maximaler Steigung in der ersten und letzten Stützstelle erhält man Fahrkurven, bei denen die Beschleunigungs- und Bremsphase so kurz wie möglich gehalten wird. Dies führt bei einer vorgegebenen Höchstgeschwindigkeit von Vmax und bei einer Beschleunigung von Amax zu den geringst möglichen Schliesszeiten. Bei der Öffnungsbewegung ist die erreichbare maximale Geschwindigkeit theoretisch nur von der Beschleunigung und der Türbreite abhängig.

Falls der Selbstlernvorgang mit den daraus abgeleiteten Fahrkurven in gewissen Zeitabständen wiederholt wird, besteht für einen Türantrieb die Möglichkeit, sich an gegebene kinetische Verhältnisse anzupassen und sogar auf Änderungen wie beispielsweise zunehmende Reibung zu reagieren. Dabei kann vollständig auf die Eingabe von Parametern verzichtet werden, falls die Parameter Motordrehmoment, Gewicht der Schliessgewichte 21, Getriebeübersetzung, Auflösung des Inkrementalgebers 8 und der Faktor p in einem nichtflüchtigen Speicher des Microcomputers 13 abgelegt sind.

In Fig. 9 ist der fünfte Algorithmus ALGO5 zur Steuerung des Selbstlernvorganges näher erläutert. Im Schritt S100 wird der fünfte Algorithmus ALGO5 gestartet. Im Schritt 101 wird der Motor 3 stromlos geschaltet. Gleichzeitig wird die Tür 2 selbsttätig mittels der Schliessgewichte 21 geschlossen. In der Schliessstellung der Tür 2 wird im Schritt S102 ein im Microcomputer 13 implementierter, die Impulse des Inkrementalgebers 8 zählender Positionszähler geeicht. Dann öffnet im Schritt S103 der Motor 3 die Tür 2 mit langsamer Geschwindigkeit. Mit einer im Schritt S104 gezeigten kleinen Zeitverzögerung führt der fünfte Algorithmus ALGO5 den Prüfschritt S105 durch, in dem iterativ geprüft wird, ob die Tür 2 ihre Endlage erreicht hat. Bei einem mit Nein bezeichneten negativen Ergebnis der Prüfung werden die Schritte S104 und S105 wiederholt. Ein mit Ja bezeichnetes positives Ergebnis der im Schritt S105 durchgeführten Prüfung rechtfertigt die Ausführung der Schritte S106 und S107, in denen der Motor 3 ausgeschaltet wird und der Wert des Positionszählers dem Parameter Türbreite Xmax zugeordnet wird. Im Schritt S108 wird die Türmasse und die Reibkraft gemäss einem in der veröffentlichten Anmeldeschrift EP-A1-0 548 505 beschriebenen Verfahren ermittelt. Aus der Energiebetrachtung

$$E = \frac{1}{2} * m * V^2$$

mit m = Türmasse und E = 10 Joule als höchstzulässige Türenergie wird im Schritt S109 die maximale Türgeschwindigkeit Vmax-zu beim Schliessvorgang berechnet. Im Schritt S110 wird die maximale Beschleunigung Amax-auf für den Öffnungsvorgang und die maximale Beschleunigung Amax-zu für den Schliessvorgang berechnet, wobei die maximale Beschleunigung sich aus dem Motordrehmoment, der Reibkraft, der Türmasse und den Schliessgewichten 21 errechnet. Anschliessend wird der in Fig. 10 gezeigte sechste Algorithmus ALGO6 aktiviert, der in den Schritten S111 ... S124 die Fahrkurve für den Schliessvorgang aus den Parametern Xmax, Vmax-zu und Amax-zu erzeugt. Aus der Gleichung Vmax-auf = Vmax-zu * Faktor wird im Schritt S125 die maximale Türgeschwindigkeit Vmax-auf beim Öffnungsvorgang berechnet, wobei keine höchstzulässige Energie von 10 Joule zu berücksichtigen ist und somit der Faktor kleiner, gleich oder grösser als eins gewählt werden kann. Anschliessend wird der in Fig. 10 gezeigte sechste

Algorithmus ALGO6 aktiviert, der in den Schritten S111 ... S124 die Fahrkurve für den Öffnungssvorgang aus den Parametern Xmax, Vmax-auf und Amax-auf erzeugt. Mit dem Schritt S126 ist ein Algorithmus, beispielsweise der in Fig. 4 gezeigte erste Algorithmus ALGO1 ab Schritt S23, zur Steuerung der Türbewegung für den Öffnungs- und Schliessvorgang angedeutet.

In Fig. 10 ist der sechste Algorithmus ALGO6 zur Berechnung von auf Türparameter abgestimmte Fahrkurven für den Öffnungs- und Schliessvorgang näher erläutert. Die zur Berechnung notwendigen Parameter Xmax, Amax-zu, Amax-auf, Vmax-zu, Vmax-auf werden vom fünften Algorithmus ALGO5 übergeben. Im Schritt S111 wird der sechste Algorithmus ALGO6 gestartet. Der im Schritt S112 berechnete Beschleunigungsweg Sb ist diejenige Wegstrecke, die zurückgelegt wird, während der die Tür auf die Endgeschwindigkeit Vmax beschleunigt wird. Mit Sb und Vmax wird im Schritt S113 die maximale Steigung Mmax berechnet.

Im Schritt S114 wird die aus drei Segmenten bestehende Fahrkurve mit den entsprechenden Stützstellen und Steigungen in den Stützstellen definiert. Der Faktor p von 0 ... 99% dient zur Variation der Steigung in der ersten und letzten Stützstelle. Im Schritt S115 werden die Positionswerte der ersten und zweiten Stützstelle des 1. Segmentes festgelegt und ein Parameter Delta_X definiert. Delta_X ist die Schrittweite, um die X1 schrittweise erhöht wird und ist von der maximalen Türbreite Xmax abhängig. In den Schritten S116 ... S119 berechnet der sechste Algorithmus ALGO6 das 1. Segment solange und verschiebt die zweite Stützstelle X1/Y1 des 1. Segmentes um den Wert Delta_X mit Sb beginnend solange nach rechts, bis die berechnete $X^3$-Parabel zwischen X0 und X1 eine maximale Steigung von Mz aufweist, die höchstens Mmax ist. Im Schritt S120 werden die Positionswerte der ersten und zweiten Stützstelle des 3. Segmentes festgelegt, mit denen das 3. Segment im Schritt S121 berechnet wird. Im Schritt S122 werden die Positionswerte der ersten und zweiten Stützstelle des 2. Segmentes festgelegt, mit denen das 2. Segment im Schritt S123 berechnet wird. Der sequentielle Ablauf des sechsten Algorithmus ALGO6 wird mit dem Schritt S124 beendet.

**Patentansprüche**

1.  Verfahren zur Steuerung der Bewegung von Türen (2), wobei die Bewegung mittels einer Türsteuerung (11) und eines Türantriebes (9) in Abhängigkeit von einer die Geschwindigkeit über der Position der Tür (2) abbildenden Fahrkurve (AUF, ZU, DOWN, UP) für den Öffnungs-, Schliess- und Reversionsvorgang erfolgt, wobei die Fahrkurve (AUF, ZU, DOWN, UP) mindestens ein aus einer mathematischen Funktion bestehendes Kurvensegment (1, 2 ... N) aufweist,
    dadurch gekennzeichnet,

    dass sich die mathematischen Funktionen der benachbarten Kurvensegmente (1, 2 ... N) am Segmentübergang mit gleichen Steigungen treffen.

2.  Verfahren nach Anspruch 1,
    dadurch gekennzeichnet,

    dass die mathematische Funktion eines Kurvensegmentes eine Gerade oder eine Parabel ist.

3.  Verfahren nach einem der vorangehenden Ansprüche,
    dadurch gekennzeichnet,

    dass für den Öffnungsvorgang eine erste stetige aus mindestens einer mathematischen Funktion bestehende Fahrkurve (AUF), für den Schliessvorgang eine zweite stetige aus mindestens einer mathematischen Funktion bestehende Fahrkurve (ZU) und für den Reversionsvorgang eine erste stetige aus mindestens einer mathematischen Funktion bestehende Reversionskurve (DOWN) für die Verzögerungsphase und eine zweite stetige aus mindestens einer mathematischen Funktion bestehende zweite Reversionskurve (UP) für die Beschleunigungsphase gebildet wird.

4.  Verfahren nach Anspruch 3,
    dadurch gekennzeichnet,

    dass die einzelnen Fahrkurven (AUF, ZU, DOWN, UP) nach einem Algorithmus (ALGO2, ALGO6) zusammengesetzt werden.

5.  Verfahren nach Anspruch 4,
    dadurch gekennzeichnet,

dass ein erster Algorithmus (ALGO1) den zweiten Algorithmus (ALGO2) zur Berechnung der Fahrkurven (AUF, ZU) aktiviert, den Öffnungs- und Schliessvorgang steuert, einen dritten Algorithmus (ALGO3) zur Türbewegung aktiviert und bei Reversionsbedingungen den vierten Algorithmus (ALGO4) zur Steuerung des Reversionsvorganges aktiviert.

6. Verfahren nach Anspruch 5,
dadurch gekennzeichnet,

dass der erste Algorithmus (ALGO1) den zweiten Algorithmus (ALGO2) zur Berechnung der Fahrkurven (AUF, ZU) dem Öffnungs- und Schliessvorgang vorgängig aktiviert und der zweite Algorithmus (ALGO2) die berechneten Fahrkurven (AUF, ZU) in einem Speicher des Fahrkurvenrechners (14) ablegt, wobei die berechneten Fahrkurven (AUF, ZU) während des Bewegungsablaufs aus dem Speicher ausgelesen werden.

7. Verfahren nach Anspruch 5,
dadurch gekennzeichnet,

dass der erste Algorithmus (ALGO1) den zweiten Algorithmus (ALGO2) zur Berechnung der Fahrkurven (AUF, ZU) dem Öffnungs- und Schliessvorgang vorgängig aktiviert und der zweite Algorithmus (ALGO2) die berechneten Fahrkurven (AUF, ZU) in einem Speicher des Fahrkurvenrechners (14) ablegt und dass der zweite Algorithmus (ALGO2) dem Öffnungs- und Schliessvorgang vorgängig aus den Fahrkurven (AUF, ZU) Drehzahlsollwerte in Abhängigkeit von der Position der Tür berechnet und in einem Speicher des Fahrkurvenrechners (14) tabellarisch ablegt, wobei die berechneten Drehzahlwerte während des Bewegungsablaufs aus dem Speicher ausgelesen werden.

8. Verfahren nach Anspruch 5,
dadurch gekennzeichnet,

dass der vierte Algorithmus (ALGO4) den zweiten Algorithmus (ALGO2) zur Berechnung der Reversionskurven (DOWN, UP) dem Reversionsvorgang vorgängig aktiviert und der zweite Algorithmus (ALGO2) die berechneten Reversionskurven (DOWN, UP) in einem Speicher des Fahrkurvenrechners (14) ablegt, wobei die berechneten Reversionskurven (DOWN, UP) während des Bewegungsablaufs aus dem Speicher ausgelesen werden.

9. Verfahren nach den Ansprüchen 5 bis 7,
dadurch gekennzeichnet,

dass der zweite Algorithmus (ALGO2) mindestens ein Kurvensegment der Fahrkurven (AUF, ZU) mit am Terminal (15) eingegebenen Parametern berechnet, wobei die mathematische Funktion des jeweiligen Kurvensegmentes eine Gerade oder eine Parabel ist.

10. Verfahren nach Anspruch 5,
dadurch gekennzeichnet,

dass der dritte Algorithmus (ALGO3) den Stand des Inkrementalgebers (8) mittels des zweiten Interface 10 importiert und daraus die Position der Tür (2) ermittelt,
dass der dritte Algorithmus (ALGO3) aus der aktuellen Fahrkurve (AUF, ZU, DOWN, UP) den Sollwert der Drehzahl an der Position der Tür (2) ermittelt,
dass der dritte Algorithmus (ALGO3) den Stand des Inkrementalgebers (8) mittels des zweiten Interface (10) importiert und daraus den aktuellen Istwert der Drehzahl ermittelt und
dass der dritte Algorithmus (ALGO3) eine der Differenz aus Istwert und Sollwert der Drehzahl entsprechende Regelabweichung an eine Regelung (17) weiterleitet, die einen einen Motor (3) mit Energie speisenden Leistungsteil (12) mit einem der Regelabweichung proportionalen Steuersignal beaufschlagt.

11. Verfahren nach Anspruch 5,
dadurch gekennzeichnet,

dass der vierte Algorithmus (ALGO4) mindestens ein Kurvensegment der Reversionskurven (DOWN, UP) mit zum Zeitpunkt der Reversionsursache aktuellen Parametern der Fahrkurven (AUF, ZU) berechnet, wobei die mathematische Funktion des jeweiligen Kurvensegmentes eine Parabel ist und

dass der vierte Algorithmus (ALGO4) den Reversionsvorgang steuert und den dritten Algorithmus (ALGO3) zur Türbewegung aktiviert.

12. Verfahren nach einem der vorangehenden Ansprüche, dadurch gekennzeichnet,

dass ein fünfter Algorithmus (ALGO5) einen Selbstlernvorgang zur Ermittlung von Türparametern steuert, den sechsten Algorithmus (ALGO6) zur Berechnung von auf die Türparameter abgestimmte Fahrkurven aktiviert und den ersten Algorithmus (ALGO1) aktiviert.

13. Verfahren nach Anspruch 12,
dadurch gekennzeichnet,

dass der fünfte Algorithmus (ALGO5) beim Selbstlernvorgang die Türbreite, die Türmasse, die Reibkraft, die maximale Beschleunigung und die maximale Geschwindigkeit der Tür (2) ermittelt und dem sechsten Algorithmus (ALGO6) die maximale Türbreite, die maximale Beschleunigung und die maximale Geschwindigkeit als Türparameter übergibt.

14. Verfahren nach Anspruch 13,
dadurch gekennzeichnet,

dass der sechste Algorithmus (ALGO6) mit den Türparametern aus drei Segmenten bestehende Fahrkurven berechnet, wobei das erste und dritte Segment eine $X^3$-Parabel und das zweite Segment eine Gerade ist.

## Claims

1. Method for the control of movement of doors (2), wherein the movement takes place by means of a door control (11) and a door drive (9) in dependence on a travel curve (OPEN, SHUT, DOWN, UP) depicting the speed as a function of the position of the door (2) for the operations of opening, closing and reversion, wherein the travel curve (OPEN, SHUT, DOWN, UP) has at least one curve segment (1, 2 ... N) consisting of at least one mathematical function, characterised thereby that the mathematical functions of adjacent curve segments (1, 2 ... N) meet at the segment transition with the same slope.

2. Method according to claim 2 or 3, characterised thereby that the mathematical function of a curve segment is a straight line or a parabola.

3. Method according to one of the preceding claims, characterised thereby, that a first continuous travel curve (OPEN) consisting of at least one mathematical function is formed for the opening operation, a second continuous travel curve (SHUT) consisting of at least one mathematical function is formed for the closing operation, a first continuous reversion curve (DOWN) consisting of at least one mathematical function is formed for the retardation phase of the reversion operation and a second continuous reversion curve (UP) consisting of at least one mathematical function is formed for the acceleration phase of the reversion operation.

4. Method according to claim 3, characterised thereby that the individual travel curves (OPEN, SHUT, DOWN, UP) are put together according to an algorithm (ALGO2, AGLO6).

5. Method according to claim 4, characterised thereby that a first algorithm (ALGO1) activates the second algorithm (ALGO2) for the computation of the travel curves (OPEN, SHUT), controls the operations of opening and closing, activates a third algorithm (ALGO3) for the door movement and in the case of reversion conditions activates the fourth algorithm (ALGO4) for the control of the reversion operation.

6. Method according to claim 5, characterised thereby that the first algorithm (ALGO1) activates the second algorithm (ALGO2) for the computation of the travel curves (OPEN, SHUT) before the operations of opening and closing and the second algorithm (ALGO2) files the computed travel curves (OPEN, SHUT) in a storage device of the travel curve computer (14), wherein the computed travel curves (OPEN, SHUT) are read out of the storage device during the movement sequence.

7. Method according to claim 5, characterised thereby that the first algorithm (ALGO1) activates the second algorithm

(ALGO2) for the computation of the travel curves (OPEN, SHUT) before the operations of opening and closing and the second algorithm (ALGO2) files the computed travel curves (OPEN, SHUT) in a storage device of the travel curve computer (14) and that the second algorithm (ALGO2) before the operations of opening and closing computes target rotational speed values in dependence on the position of the door from the travel curves (OPEN, SHUT) and files them in tabular manner in a storage device of the travel curve computer (14), wherein the computed rotational speed values are read out of the storage device during the movement sequence.

8. Method according to claim 5, characterised thereby that the fourth algorithm (ALGO4) activates the second algorithm (ALGO2) for the computation of the reversion curves (DOWN, UP) before the reversion operation and the second algorithm (ALGO2) files the computed reversion curves (DOWN, UP) in a storage device of the travel curve computer (14), wherein the computed reversion curves (DOWN, UP) are read out of the storage device during the movement sequence.

9. Method according to claims 5 to 7, characterised thereby that the second algorithm (ALGO2) computes at least one curve segment of the travel curves (OPEN, SHUT) with parameters entered at the terminal (15), wherein the mathematical function of the respective curve segment is a straight line or a parabola.

10. Method according to claim 5, characterised thereby that the third algorithm (ALGO3) imports the state of the incremental transmitter (8) by means of the second interface (10) and ascertains the position of the door (2) therefrom, that the third algorithm (ALGO3) ascertains the target value of the rotational speed at the position of the door (2) from the actual travel curve (OPEN, SHUT, DOWN, UP), that the third algorithm (ALGO3) imports the state of the incremental transmitter (8) by means of the second interface (10) and ascertains the up-to-date actual value of the rotational speed therefrom and that the third algorithm (ALGO3) passes a regulating deviation, which corresponds to the difference between the actual value and the target value of the rotational speed, on to a regulation (17), which acts on a power unit (12), which feeds a motor (3) with energy, by a control signal proportional to the regulating deviation.

11. Method according to claim 5, characterised thereby that the fourth algorithm (ALGO4) computes at least one curve segment of the reversion curves (DOWN, UP) with parameters, which are actual at the instant of the cause of the reversion, of the travel curves (OPEN, SHUT), wherein the mathematical function of the respective curve segment is a parabola and that the fourth algorithm (ALGO4) controls the reversion operation and activates the third algorithm (ALGO3) for the movement of the door.

12. Method according to one of the preceding claims, characterised thereby that a fifth algorithm (ALGO5) controls a learning process for the ascertaining of door parameters, activates the sixth algorithm (ALGO6) for the computation of travel curves matched to the door parameters and activates the first algorithm (ALGO1).

13. Method according to claim 12, characterised thereby that the fifth algorithm (ALGO5) ascertains the door width, the door mass, the friction force, the maximum acceleration and the maximum speed of the door (2) during the learning process and passes the maximum door width, the maximum acceleration and the maximum speed as door parameters over to the sixth algorithm (ALGO6).

14. Method according to claim 13, characterised thereby that the sixth algorithm (ALGO6) computes travel curves consisting of three segments with the door parameters, wherein the first and the third segment each are an $X^3$ parabola and the second segment is a straight line.

**Revendications**

1. Procédé pour commander le mouvement de portes (2), selon lequel le mouvement a lieu grâce à une commande de porte (11) et à un mécanisme d'entraînement de porte (9) en fonction d'une courbe de marche (OUVERTURE, FERMETURE, DOWN, UP) pour l'ouverture, la fermeture et l'inversion de marche, laquelle courbe représente la vitesse de la porte (2) en fonction de sa position, la courbe de marche (OUVERTURE, FERMETURE, DOWN, UP) présentant au moins un segment de courbe (1, 2...N) formé à partir d'une fonction mathématique,
caractérisé en ce que les fonctions mathématiques des segments de courbe voisins (1, 2...N) se rencontrent au niveau de la transition de segments avec des pentes identiques.

2. Procédé selon la revendication 1,
caractérisé en ce que la fonction mathématique d'un segment de courbe est une droite ou une parabole.

**3.** Procédé selon l'une des revendications précédentes,
caractérisé en ce qu'on définit pour l'opération d'ouverture une première courbe de marche continue (OUVERTURE) formée à partir d'au moins une fonction mathématique, on définit pour l'opération de fermeture une seconde courbe de marche continue (FERMETURE) formée à partir d'au moins une fonction mathématique, et on définit pour l'opération d'inversion de marche une première courbe d'inversion continue (DOWN) formée à partir d'au moins une fonction mathématique pour la phase de ralentissement, et une seconde courbe d'inversion continue (UP) formée à partir d'au moins une fonction mathématique pour la phase d'accélération.

**4.** Procédé selon la revendication 3,
caractérisé en ce que les courbes de marche individuelles (OUVERTURE, FERMETURE, DOWN, UP) sont réunies selon un algorithme (ALGO2, ALGO6)

**5.** Procédé selon la revendication 4,
caractérisé en ce qu'un premier algorithme (ALGO1) active le deuxième algorithme (ALGO2) pour le calcul des courbes de marche (OUVERTURE, FERMETURE), commande les opérations d'ouverture et de fermeture, active un troisième algorithme (ALGO3) pour le mouvement de la porte et, dans des conditions d'inversion de marche, active le quatrième algorithme (ALGO4) pour la commande de l'opération d'inversion.

**6.** Procédé selon la revendication 5,
caractérisé en ce que le premier algorithme (ALGO1) active le deuxième algorithme (ALGO2) pour le calcul des courbes de marche (OUVERTURE, FERMETURE) de manière à devancer les opérations d'ouverture et de fermeture, et le deuxième algorithme (ALGO2) dépose les courbes de marche calculées (OUVERTURE, FERMETURE) dans une mémoire du calculateur de courbes de marche (14), lesdites courbes de marche calculées (OUVERTURE, FERMETURE) étant extraites de la mémoire pendant le déroulement du mouvement.

**7.** Procédé selon la revendication 5,
caractérisé en ce que le premier algorithme (ALGO1) active le deuxième algorithme (ALGO2) pour le calcul des courbes de marche (OUVERTURE, FERMETURE) de manière à devancer les opérations d'ouverture et de fermeture, et le deuxième algorithme (ALGO2) dépose les courbes de marche calculées (OUVERTURE, FERMETURE) dans une mémoire du calculateur de courbes de marche (14), et

en ce que le deuxième algorithme (ALGO2), avant les opérations d'ouverture et de fermeture, calcule à partir des courbes de marche (OUVERTURE, FERMETURE) des valeurs de vitesse de rotation théoriques en fonction de la position de la porte, et les dépose sous forme de tableau dans une mémoire du calculateur de courbes de marche (14), les valeurs de vitesse de rotation calculées étant extraites de la mémoire pendant le déroulement du mouvement.

**8.** Procédé selon la revendication 5,
caractérisé en ce que le quatrième algorithme (ALGO4) active le deuxième algorithme (ALGO2) pour le calcul des courbes d'inversion de marche (DOWN, UP) de manière à devancer l'opération d'inversion de marche, et le deuxième algorithme (ALGO2) dépose les courbes d'inversion calculées (DOWN, UP) dans une mémoire du calculateur de courbes de marche (14), lesdites courbes d' inversion calculées (DOWN, UP) étant extraites de la mémoire pendant le déroulement du mouvement.

**9.** Procédé selon les revendications 5 à 7,
caractérisé en ce que le deuxième algorithme (ALGO2) calcule au moins un segment des courbes de marche (OUVERTURE, FERMETURE) avec des paramètres entrés au niveau du terminal (15), la fonction mathématique du segment de courbe correspondant étant une droite ou une parabole.

**10.** Procédé selon la revendication 5,
caractérisé en ce que le troisième algorithme (ALGO3) importe l'état du générateur incrémentiel (8) à l'aide de la seconde interface (10) et détermine à partir de là la position de la porte (2),

en ce que le troisième algorithme (ALGO3) détermine à partir de la courbe de marche effective (OUVERTURE, FERMETURE, DOWN, UP) la valeur théorique de la vitesse de rotation au niveau de la position de la porte (2), en ce que le troisième algorithme (ALGO3) importe l'état du générateur incrémentiel (8) à l'aide de la seconde interface (10) et détermine à partir de là la valeur réelle effective de la vitesse de rotation, et en ce que le troisième algorithme (ALGO3) transmet à un dispositif de régulation (17) un écart de régulation correspondant à la différence entre la valeur réelle et la valeur théorique de la vitesse de rotation, lequel dispositif de régulation sollicite avec un signal de commande proportionnel à l'écart de régulation un élément de puissance (12) qui alimente en énergie un moteur (3).

11. Procédé selon la revendication 5,
caractérisé en ce que le quatrième algorithme (ALGO4) calcule au moins un segment des courbes d'inversion (DOWN, UP) avec des paramètres des courbes de marche (OUVERTURE, FERMETURE) qui sont effectifs au moment de la cause de l'inversion de marche, la fonction mathématique du segment de courbe correspondant étant une parabole, et

en ce que le quatrième algorithme (ALGO4) commande l'opération d'inversion de marche et active le troisième algorithme (ALGO3) pour le mouvement de porte.

12. Procédé selon l'une des revendications précédentes,
caractérisé en ce qu'un cinquième algorithme (ALGO5) commande une opération d'apprentissage automatique destinée à déterminer des paramètres de porte, active le sixième algorithme (ALGO6) pour le calcul de courbes de marche adaptées aux paramètres de porte, et active le premier algorithme (ALGO1).

13. Procédé selon la revendication 12,
caractérisé en ce que le cinquième algorithme (ALGO5), lors de l'opération d'apprentissage automatique, détermine la largeur de la porte, la masse de la porte, la force de frottement, l'accélération maximale et la vitesse maximale de la porte (2), et transmet au sixième algorithme (ALGO6) la largeur de porte maximale, l'accélération maximale et la vitesse maximale comme paramètres de porte.

14. Procédé selon la revendication 13, caractérisé en ce que le sixième algorithme (ALGO6) calcule avec les paramètres de porte des courbes de marche formées de trois segments, les premier et troisième segments étant des paraboles $X^3$ tandis que le deuxième est une droite.

# Fig. 1

Y=f(X)

Drehzahl

X0,Y0,m0

Y1,X1,m1

X0,Y0,m1

Y1,X1,m1

Y1,X1,m1

X0,Y0,m0

Position X

Segment 1          Segment 2          Segment N

# Fig. 2

Y=f(X)

Drehzahl

Yr,Xr,mr

Y0 DOWN = Yr
X0 DOWN = Xr
m0 DOWN = f'AUF(Xr)

P1

P1

DOWN-Kurve

AUF-Kurve

X1 UP = f zu (Xr)
X1 UP = Xr
m1 UP = f'zu (Xr)

ZU-Kurve

P1

P1

Y1 DOWN = Y0 UP = 0
X1 DOWN = X0 UP = Xr + Xan
m1 DOWN = m0 UP = 0

UP-Kurve

P1

Xan

Position X

# Fig. 3

**Fig. 4**

```
                    ( Start )————— S1
                        │
                ┌───────────────┐
                │ Initialisierung │————— S2
                └───────────────┘
                        │
            ┌─────────────────────────┐
            │  Fahrkurvenberechnung    │————— S3 .. S22
            │      AUF-Kurve           │
            └─────────────────────────┘
                        │
            ┌─────────────────────────┐
            │  Fahrkurvenberechnung    │————— S3 .. S22
            │      ZU-Kurve            │
            └─────────────────────────┘
                        │
        Nein      ╱◇◇◇◇◇◇◇◇◇╲
   ◄───────────  Befehl: Öffnen  ————— S23
                 ╲    ?    ╱
                        │ Ja
            ┌─────────────────────────┐
            │ Bewegungsrichtung = AUF  │————— S24
            └─────────────────────────┘
                        │
            ┌─────────────────────────┐
            │  FAHRKURVE = AUF-Kurve   │————— S25
            └─────────────────────────┘
                        │
            ┌─────────────────────────┐
            │ Tür nach FAHRKURVE bewegen│——— S26 .. S32
            └─────────────────────────┘
                        │
              ╱◇◇◇◇◇◇◇╲      Ja    ┌──────────┐
     S33 ——  Reversion  ─────────► │ Reversion │
              ╲    ?   ╱           └──────────┘
                 │ Nein                 │
              ╱◇◇◇◇◇◇◇╲            S34...S47
    Nein     Tür offen ?  ————— S48
  ◄─────────  ╲       ╱
                 │ Ja
              ╱◇◇◇◇◇◇◇◇◇╲
    Nein    Befehl: Schliessen ————— S49
  ◄───────── ╲     ?    ╱
                 │ Ja
            ┌─────────────────────────┐
            │ Bewegungsrichtung = ZU   │————— S50
            └─────────────────────────┘
                        │
            ┌─────────────────────────┐
            │  FAHRKURVE = ZU-Kurve    │————— S51
            └─────────────────────────┘
                        │
            ┌─────────────────────────┐
            │ Tür nach FAHRKURVE bewegen│——— S26 .. S32
            └─────────────────────────┘
                        │
              ╱◇◇◇◇◇◇◇╲      Ja    ┌──────────┐
    S52 ——   Reversion  ─────────► │ Reversion │
              ╲    ?   ╱           └──────────┘
                 │ Nein                 │
              ╱◇◇◇◇◇◇◇╲            S34 .. S47
    Nein      Tür zu ?   ————— S53
  ◄─────────  ╲       ╱
                 │ Ja
```

## Fig. 5

Start — S3

Segmentanzahl s einlesen — S4

Y0,X0 des 1. Segments einlesen — S5

Segment N = 1 — S6

S20 — nächstes Segment N = N + 1

Segment-Typ einlesen — S7

X1,Y1 des Segments N einlesen — S8

S9 — Segment-Typ = GERADE ? — Nein → m0 des Segments N einlesen — S10

Ja

S11 — Segment-Typ = X³-Parabel — Ja → m1 des Segments N einlesen — S12

Nein

S21 — Kurve im Segment N berechnen — Nein ← Segment N > 1 ? — S13

Ja

X0 von Segment N = X1 von Segment N-1
Y0 von Segment N = Y1 von Segment N-1
m0 von Segment N = m1 von Segment N-1 — S14

Kurve im Segment N berechnen — S15

Segment-Typ von Segment N = GERADE und Segment-Typ von Segment N-1 = X³-PARABEL ? — S16 — Ja → m1 von Segment N-1 = m0 von Segment N — S17

Nein

S18 — X³-PARABEL-Kurve von Bereich N-1 neu berechnen

Segment N = Segmentanzahl s ? — S19 — Ja → Alle Solldrehzahlwerte Ysoll in Abhängigkeit von der Position X in einer Tabelle abspeichern — S19.1

Nein

Ende — S22

# Fig. 6

Start — S26

↓

Position X ermitteln — S27

S28
Solldrehzahlwert Ysoll an der Position X aus den funktions-gleichungen berechnen

S28.1
Solldrehzahlwert Ysoll an der Position X aus der Tabelle auslesen

↓

wahren Drehzahlwert Yist ermitteln — S29

↓

REGELUNG :
aus Yist – Ysoll einen
korrigierten Drehzahlwert Y× ermitteln — S30

↓

Y× an Leistungsteil ausgeben — 31

↓

Ende — S32

# Fig. 8

V(X)[U/min]

Drehzahl

Delta_X

Vmax

m1 = 0

X0/Y0

X0/Y0

X1/Y1

X0/Y0

X1/Y1

Mmax

Mz

m0 = p×Mmax

m1 = – p×Mmax

X0/Y0 Sb

X1/Y1

Position X

1. Segment | 2. Segment | 3. Segment

Beschleunigungsphase | Konstantfahrt | Bremsphase

19

**Fig. 7**

Position Xr, Drehzahlwert Yr, Bewegungsrichtung und Steigung mr zum Zeitpunkt der Reversionsursache abspeichern — S34

Kurve DOWN definieren: Segmentanzahl = 1, Segment-Typ = $X^3$-PARABEL, Y0 = Yr, X0 = Xr, m0 = mr, Y1 = 0, X1 = Xr + Xan, m1 = 0 — S35

Fahrkurvenberechnung DOWN — S36

FAHRKURVE = DOWN — S37

S38 — Position = X1 und Drehzahl = Y1 = 0 ?

Nein → Tür nach FAHRKURVE bewegen — S26...S32

Ja → Bewegungsrichtung umschalten — S39

Kurve UP definieren: Segmentanzahl = 1, Segment-Typ = $X^3$-PARABEL, Y0 = 0, X0 = Xr + Xan, m0 = 0, X1 = Xr — S40

S43 — Y1 = f(Xr), m1 = f'(Xr) aus ZU-Kurve errechnen

Nein ← Bewegungsrichtung = AUF ? — S41 → Ja

S42 — Y1 = f(Xr), m1 = f'(Xr) aus AUF-Kurve errechnen

Fahrkurvenberechnung UP — S44

S45 — FAHRKURVE = UP

S46 — Position = X1 erreicht ?

Nein → Tür nach FAHRKURVE bewegen — S26...S32

Ja → Ende — S47

**Fig. 9**

Start — S100

Motor stromlos schalten — S101

Positionszähler zu Null setzen — S102

Tür(en) mit langsamer Geschwindigkeit in die AUF-Richtung bewegen — S103

Delay-Zeit warten — S04

Tür-Ende erreicht ? — S105

Nein

Ja

Motor ausschalten — S106

Türbreite Xmax abspeichern Xmax = Positionszählerwert — S107

Ermittlung der Türmasse und der Reibkraft — S108

Ermittlung der max. Geschwindigkeit Vmax-zu — S109

Ermittlung der max. Beschleunigung für die AUF- und ZU-Richtung Amax-auf, Amax-zu — S110

Erzeugung der Fahrkurve für die ZU-Richtung aus Xmax, Vmax-zu, Amax-zu — S111...S124

für die AUF-Richtung: Vmax-auf = Vmax-zu × Faktor — S125

Erzeugung der Fahrkurve für die AUF-Richtung aus Xmax, Vmax-auf, Amax-auf — S111...S124

S126

## Fig. 10

```
                              Start ──────────────── S111

                    Beschleunigungsweg errechnen
                    Sb = Vmax² / (2×Amax) ────────── S112

                    Berechnung der maximalen
                    Steigung Mmax = Vmax / Sb ────── S113
                                                      S114
     Kurve definieren :        Segmentzahl = 3,
     1. Segment : X³-PARABEL, Y0 = 0, Y1 = Vmax, m0 = p×Mmax, m1 = 0
     2. Segment : GERADE, Y0 = Y1 = Vmax, m0 = m1 = 0
     3. Segment : X³-PARABEL, Y0 = Vmax, Y1 = 0, m1 = - p×Mmax, m0 = 0

                    1. Segment : X0 = 0, X1 = Sb
                    Delta_X = Xmax / 100 ─────────── S115

                    Segment 1 berechnen ──────────── S116
 S119
     Segment 1 :              Bestimmung der maximalen
     X1 = X1 + Delta_X        Steigung Mz von Segment 1 ── S117

                             ◇ Mz <= Mmax ◇ ──────── S118
                    Nein          ?                   S120
                               Ja

     3. Segment : X0 = Xmax - X1 (X1 von Segment 1)
                  X1 = Xmax

                    Segment 3 berechnen ──────────── S121

                    2. Segment (Gerade):
                    X0 = X1 von Segment 1,
                    X1 = X0 von Segment 3 ────────── S122

                    Segment 2 berechnen ──────────── S123

                              Ende ───────────────── S124
```